# EUROPÄISCHE PATENTANMELDUNG

(11) **EP 4 163 135 A1**
(43) Veröffentlichungstag der Anmeldung: **12.04.2023**
(21) Anmeldenummer: 22194616.3
(22) Anmeldetag: 08.09.2022
(51) Int. Cl.: B60H 1/32, B60H 1/00

(54) **KLIMAANLAGE FÜR EIN FAHRZEUG**

(30) Priorität: 08.10.2021 DE 102021211379
(71) Anmelder: Siemens Mobility GmbH, 81739 München (DE)
(72) Erfinder: Henkel, Sven, 47829 Krefeld (DE)
(74) Vertreter: Siemens Patent Attorneys

(57) **Zusammenfassung**

Die Erfindung betrifft eine Klimaanlage für ein Fahrzeug, mit wenigstens einem Kältekreis (1), der eine Kältemittelleitung (2), einen Verdampfer (3), einen Verdichter (5), einen Verflüssiger (6) und ein Expansionsventil (8) umfasst, wobei dem Verflüssiger (6) ein Verflüssiger-Lüfter (7) zur Entwärmung des Verflüssigers (6) zugeordnet ist, wobei der wenigstens eine Kältekreis (1) mit einem Drucksensor (12) ausgestattet ist, der fortlaufend aktuelle, in einem Abschnitt des wenigstens einen Kältekreises (1) vorliegende Druck-Messwerte des Kältemittels erfasst und einer Vergleichseinrichtung signalisiert, die zum Feststellen einer Leckage in dem wenigstens einen Kältekreis (1) die Druck-Messwerte oder einen aus ihnen abgeleiteten Wert mit einem vorbestimmten, eine vorliegende Leckage des wenigstens einen Kältekreises (1) wiedergebenden Schwellwert vergleicht und aufgrund eines eine Leckage des wenigstens einen Kältekreises (1) anzeigenden Vergleichsergebnisses einen Schalter zum Einschalten des Verflüssiger-Lüfters (7) betätigt, sowie ein Verfahren zum Betrieb einer solchen Klimaanlage.

## Beschreibung

Die Erfindung bezieht sich auf eine Klimaanlage für ein Fahrzeug nach dem Oberbegriff von Anspruch 1 und auf ein Verfahren zu deren Betrieb.

Danach ist eine Klimaanlage mit wenigstens einem Kältekreis bekannt, der eine Kältemittelleitung, einen Verdampfer, ein Verflüssiger und ein Expansionsventil umfasst, wobei dem Verflüssiger ein Verflüssiger-Lüfter zur Entwärmung des Verflüssigers zugeordnet ist.

Zum Betrieb des Kältekreises kommen verschiedene Kältemittel zum Einsatz. Neuerdings sollen insbesondere bei Schienenfahrzeugen auch brennbare flüssige/gasförmige Kältemittel verwendet werden, beispielsweise das gasförmige Kältemittel R290 (Propan). Bei Einsatz eines solchen brennbaren Kältemittels sind insbesondere Maßnahmen für denjenigen Fall zu treffen, dass in dem Kältekreis eine Leckage auftritt, so dass Kältemittel austritt. Insbesondere bei einer Leckage im Verflüssiger/Verdichter-Bereich (VVS) besteht die Gefahr, dass das Kältemittel ausläuft und sich zunächst innerhalb der Klimaanlage im Verflüssiger/Verdichter-Bereich verteilt, um anschließend in eine Umgebung des Fahrzeugs zu gelangen. Ursache für diese Art der Ausbreitung des brennbaren Kältemittels ist das Schwergasverhalten des Gases "Propan".

Wenn sich beispielsweise ein Schienenfahrzeug in einem Bahnhof befindet, besteht somit die Möglichkeit, dass am Bahnsteig befindliche Personen einem ggf. entzündlichen Gemisch aus Luft und dem Kältemittel ausgesetzt werden können. Es besteht dann die Gefahr, dass durch eine entsprechende Zündquelle, z.B. offenes Feuer, Lichtbogen usw., das Gemisch entzündet wird und Personen/Fahrgäste/Wartungspersonal zu Schaden kommen können.

Ausgehend hiervon liegt der Erfindung die Aufgabe zugrunde, eine Klimaanlage der eingangs genannten Art derart weiterzuentwickeln, dass im Fall einer Leckage der Kältemittelleitung auch bei Einsatz von brennbaren Kältemitteln eine Gefahr für in der Nähe befindliche Personen vermindert wird, und ein Verfahren zum Betreib einer solchen Klimaanlage anzugeben.

Diese Aufgabe wird gelöst durch eine Klimaanlage mit den Merkmalen des Anspruchs 1.

Danach zeichnet sich die eingangs beschriebene Klimaanlage dadurch aus, dass der wenigstens eine Kältekreis mit einem Drucksensor ausgestattet ist, der fortlaufend aktuelle, in einem Abschnitt des Kältekreises vorliegende Druck-Messwerte des Kältemittels erfasst und einer Vergleichseinrichtung signalisiert, die zum Feststellen einer Leckage in dem wenigstens einen Kältekreis die Druck-Messwerte oder einen aus ihnen abgeleiteten Wert mit einem vorbestimmten, eine vorliegende Leckage des wenigstens einen Kältekreises wiedergebenden Schwellwert vergleicht und aufgrund eines eine Leckage des wenigstens einen Kältekreises anzeigenden Vergleichsergebnisses einen Schalter zum Einschalten des Verflüssiger-Lüfters betätigt.

Der Schalter ist bevorzugt als mittels einer Steuerspannung betätigbarer Schalter ausgebildet und kann als Schütz ausgeführt sein.

Mit Hilfe des Drucksensors werden Druck-Messwerte gewonnen, deren Auswertung eine Aussage darüber erlaubt, ob in dem wenigstens einen Kältekreis eine Leckage vorliegt. Bei Feststellen eines solchen Ereignisses wird der Verflüssiger-Lüfter durch entsprechende Ansteuerung über den Schalter eingeschaltet. Dies hat die Folge, dass im Fall einer Leckage eine Ansammlung von insbesondere brennbarem Kältemittel auf einen bestimmten Raum bzw. Ort vermieden werden kann. Insbesondere wird verhindert, dass ein explosives Gemisch aus beispielsweise Propan und Luft innerhalb der Klimaanlage bzw. am Fahrzeug entstehen kann. Beispielsweise Propan wird durch den Verflüssiger-Lüfter mit hoher Geschwindigkeit aus der Klimaanlage transportiert und kann sich außerhalb des Fahrzeugs mit Umgebungsluft verdünnen, so dass kein explosives Gemisch entsteht. Insbesondere wird eine untere Explosionsgrenze für das brennbare Kältemittel unterschritten, so dass ein Gefahrenpotential durch die Leckage wirksam vermindert wird.

Das Einschalten des Verflüssiger-Lüfters erfolgt rein hardware-technisch, nämlich bevorzugt über das Schütz. Dabei bedeutet der Begriff "hardware-technisch", dass keinerlei Software für den Einschaltvorgang des Verflüssiger-Lüfters zum Einsatz kommt.

Bei Feststellen einer vorliegenden Leckage durch Auswertung der Druck-Messwerte, die von dem Drucksensor geliefert werden, wird der Schalter aktiviert. Diese Aktivierung gibt die Spannungsversorgung für den Verflüssiger-Lüfter frei und der Verflüssiger-Lüfter läuft an, wobei dann ein im Innenraum der Klimaanlage befindliches Medium, das das ausgetretene Kältemittel umfasst, nach Außen abgeführt wird.

Die vorgesehene Vergleichseinrichtung kann in den Drucksensor integriert sein und einen aktuell erfassten Druck-Messwert mit einem vorbestimmten, eine Leckage des Kältekreises widergebenden Druckschwellwert vergleichen. Wird der vorbestimmte Druck-Schwellwert unterschritten, aktiviert der Drucksensor selbst den Schalter, so dass die Spannungsversorgung für den Verflüssiger-Lüfter eingeschaltet wird.

Bei einer alternativen Ausführungsform der Erfindung kann die Vergleichseinrichtung in einen Klimaregler der Klimaanlage integriert sein, aus einer Anzahl aufeinander folgender Druck-Messwerte einen Druckgradienten berechnen und diesen mit einem vorbestimmten, eine Leckage des Kältekreises widergebenden Druckgradienten-Schwellwert vergleichen. Bei diesem vorbestimmten Druckgradienten-Schwellwert wird es sich um einen Maximalwert für Druckänderungen im Kältekreis der Klimaanlage handeln.

Selbstverständlich ist es auch möglich, dass der Klimaregler, so wie der Drucksensor bei der vorher erläuterten Ausführungsform der Erfindung, lediglich ein aktuell erfassten Druck-Messwert mit einem vorbestimmten Druck-Schwellwert vergleicht und ebenfalls bei Feststellen einer Leckage der Kältemittelleitung den Schalter aktiviert.

Bevorzugt ist der Drucksensor in einem Hochdruckbereich des Kältekreises angeordnet. Dieser Hochdruckbereich umfasst den Kältekreisabschnitt zwischen Verdichter, Verflüssiger und Expansionsventil. Bevorzugt ist jedoch der Drucksensor zwischen dem Verflüssiger und dem Expansionsventil an den Kältekreis angeschlossen. Dies hat den Vorteil, dass anfallende Druckverluste im Verflüssiger vermindert werden oder auch vollständig entfallen.

Als das Kältemittel können insbesondere brennbare Kältemittel, wie R290 (Propan) aber auch andere brennbare/toxische/explosive Kältemittel, insbesondere solche mit Schwergasverhalten gesetzt werden. Beispiele sind Butan, Isobutan, usw..

Es ist hervorzuheben, dass die Klimaanlage noch weitere Kältekreise aufweisen kann, die in ihrem allgemeinen Aufbau baugleich zu dem vorstehend beschriebenen Kältekreis sind. Jeder weitere Kältekreis ist dann mit einem eigenen Drucksensor ausgestattet und der jeweilige Verflüssiger-Lüfter ist über ein ihm zugeordnetes Schütz separat schaltbar. Häufig anzutreffen sind beispielsweise Klimaanlagen mit zwei redundanten Kältekreisen, die im Normalbetrieb jeweils ca. 50% Kälteleistung bereitstellen.

Ausführungsbeispiele der Erfindung werden nachfolgend unter der Bezugnahme auf die Zeichnung noch näher erläutert, wobei funktionsgleiche Komponenten mit denselben Bezugszeichen bezeichnet sind. Es zeigen:
- Figur 1: ein Blockdiagramm einer ersten Ausführungsform einer Klimaanlage und
- Figur 2: ein Blockdiagramm einer zweiten Ausführungsform einer Klimaanlage zum Betrieb mit einem brennbaren Kältemittel.

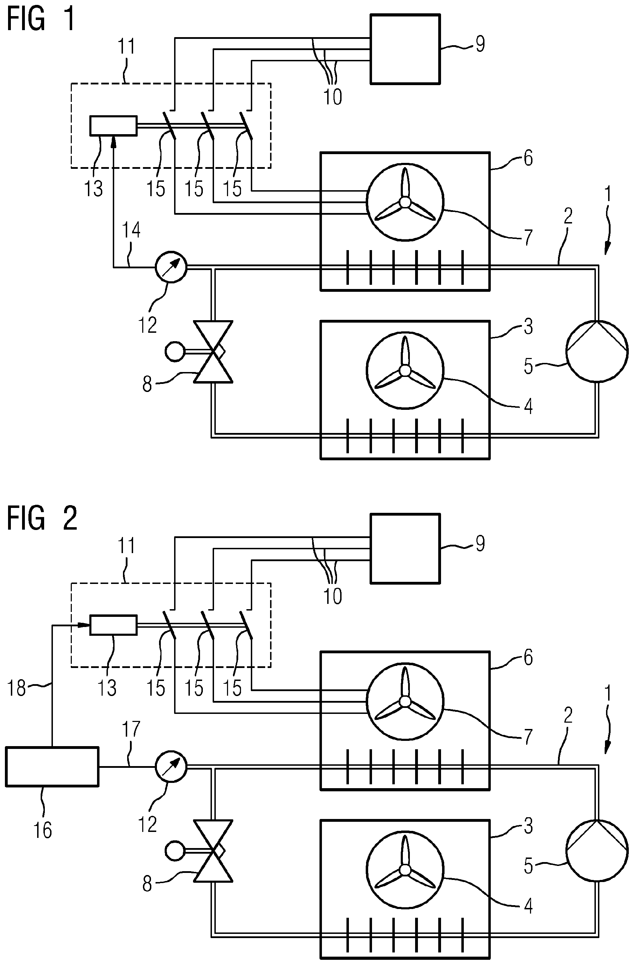

Figur 1 zeigt eine Klimaanlage für ein Fahrzeug zur Personenbeförderung, wie beispielsweise ein Schienenfahrzeug oder einen Bus, die mit einem Kältekreis 1 ausgestattet ist. Der Kältekreis 1 umfasst eine Kältemittelleitung 2, einen Verdampfer 3, der mit einem Verdampfer-Lüfter 4 ausgestattet ist, um beispielsweise konditionierte Zuluft in Richtung auf einen Fahrgastinnenraum des Fahrzeugs zu fördern. Zudem weist der Kältekreis 1 einen Verdichter 5 und einen Verflüssiger 6 auf, dem zu seiner Entwärmung ein Verflüssiger-Lüfter 7 zugeordnet ist, der durch thermische Wechselwirkung mit dem Verflüssiger 6 erwärmte Luft in eine Umgebung des Fahrzeugs abführt. Der Kältekreis 1 wird vervollständigt durch ein Expansionsventil 8.

Zum Betrieb des Verflüssiger-Lüfters 7 ist eine Spannungsquelle 9 (Hauptspannung: z. B. 380V, 400V, 440V, 480V) vorgesehen, wobei Versorgungsleitungen 10 über ein schaltbares Schütz 11 an den Verflüssiger-Lüfter 7 angeschlossen sind.

Der Kältekreis 1 wird in den Ausführungsbeispielen nach Figur 1 und Figur 2 mit einem brennbaren Kältemittel mit Schwergasverhalten, wie beispielsweise R290 (Propan) betrieben, das die Kältemittelleitung 2 durchströmt. Zum Feststellen einer Leckage in der Kältemittelleitung 2 ist die Klimaanlage mit einem Drucksensor 12 ausgestattet, der in einem Hochdruckbereich der Kältemittelleitung 2 angeordnet ist, im Ausführungsbeispiel der Figur 1 zwischen dem Verflüssiger 6 und dem Expansionsventil 8. Zum Feststellen des Vorliegens einer Leckage in der Kältemittelleitung 2 ist im Drucksensor 12 hardwareseitig ein Druck-Schwellwert eingestellt (z.B. Hochdruck < 1,5bar). Dieser wird mittels einer in den Drucksensor 12 integrierten Vergleichseinrichtung kontinuierlich mit aktuell gemessenen Druck-Werten verglichen. Sobald ein aktuell gemessener Druck-Wert kleiner ist als der hardwareseitig eingestellte Druck-Schwellwert, generiert der Drucksensor 12 eine Steuerspannung für einen Hilfskontakt 13 des Schützes 11, und zwar über eine Steuerleitung 14, welche den Drucksensor 12 unmittelbar mit dem Hilfskontakt 13 verbindet. Das Anliegen der Steuerspannung, die beispielsweise 24 V oder 110 V Gleichspannung betragen kann, zieht das Schütz 11 an und jeweilige Schalter 15 für die Versorgungsleitungen 10 werden geschlossen, so dass der Verflüssiger-Lüfter 7 bestromt und eingeschaltet wird.

Im Ergebnis fördert der Verflüssiger-Lüfter 7 mit ausgetretenem Kältemittel beaufschlagte Luft aus einem Gehäuse der Klimaanlage heraus in eine Umgebung des Fahrzeugs. In dieser Weise wird wirksam vermieden, dass ausgetretenes Kältemittel sich derart mit Luft vermischen kann, dass Brand-/Explosionsgefahr besteht.

Das Ausführungsbeispiel nach Figur 2 unterscheidet sich von demjenigen nach Figur 1 dadurch, dass der Drucksensor 12 allein die Funktion hat, aktuelle Druck-Werte in dem Abschnitt der Kältemittelleitung 2 zu messen, an den er angeschlossen ist. Diese aktuell erfassten Druck-Werte werden von dem Drucksensor 12 einem Klimaregler 16 signalisiert, und zwar über eine Signalleitung 17.

In einer ersten Variante kann der Klimaregler 16 - wie im ersten Ausführungsbeispiel Figur 1, der Drucksensor 12 - die aktuell gemessenen Druck-Werte einzeln mit einem vorbestimmten Druck-Schwellwert vergleichen und bei Unterschreiten des Druck-Schwellwertes über eine Steuerleitung 18 die erforderliche Steuerspannung für das Schütz 11 bereitstellen, so dass der Verflüssiger-Lüfter eingeschaltet wird. In einer zweiten Variante kann der Klimaregler 16 über vorbestimmte Zeitintervalle einen jeweiligen Druckgradienten berechnen und mit einem Druckgradienten-Schwellwert vergleichen. Wird ein stärkerer Druckabfall festgestellt als derjenige, der dem Druckgradienten-Schwellwert entspricht, wird das Schütz 11 angesteuert, so dass der Verflüssiger-Lüfter 7 mit Spannung versorgt und eingeschaltet wird. Beispielhaft kann der Druckgradienten-Schwellwert ≥ 5 bar betragen, wobei der Druckgradienten-Schwellwert grundsätzlich von der jeweiligen konkreten Ausführung der Klimaanlage abhängt und auch größer als 5 bar sein kann.

Es ist hervorzuheben, dass auch die Ausführung der Klimaanlage nach Figur 1 selbstverständlich über einen Klimaregler verfügt. Ein solcher Klimaregler ist jedoch nicht in die Funktion einbezogen, eine Leckage der Kältemittelleitung 2 festzustellen und bedarfsweise den Verflüssiger-Lüfter 7 einzuschalten.

Sämtlichen Ausführungsbeispielen, die anhand der Figuren 1 und 2 erläutert worden sind, ist gemeinsam, dass der Verflüssiger-Lüfter 7 im Gefahrenfall rein hardwaretechnisch eingeschaltet wird, d. h. ohne Einbeziehung von Software.

## Patentansprüche

1. Klimaanlage für ein Fahrzeug, mit wenigstens einem Kältekreis (1), der eine Kältemittelleitung (2), einen Verdampfer (3), einen Verdichter (5), einen Verflüssiger (6) und ein Expansionsventil (8) umfasst, wobei dem Verflüssiger (6) ein Verflüssiger-Lüfter (7) zur Entwärmung des Verflüssigers (6) zugeordnet ist,
**dadurch gekennzeichnet, dass**
der wenigstens eine Kältekreis (1) mit einem Drucksensor (12) ausgestattet ist, der derart ausgebildet ist, dass er fortlaufend aktuelle, in einem Abschnitt der Kältemittelleitung (2) vorliegende Druck-Messwerte des Kältemittels erfasst und einer Vergleichseinrichtung signalisiert, die zum Feststellen einer Leckage in dem wenigstens einen Kältekreis (1) die Druck-Messwerte oder einen aus ihnen abgeleiteten Wert mit einem vorbestimmten, eine vorliegende Leckage des Kältekreises (1) wiedergebenden Schwellwert vergleicht und aufgrund eines eine Leckage des wenigstens einen Kältekreises (1) anzeigenden Vergleichsergebnisses einen Schalter zum Einschalten des Verflüssiger-Lüfters (7) betätigt.

2. Klimaanlage nach Anspruch 1,
**dadurch gekennzeichnet, dass**
die Vergleichseinrichtung in den Drucksensor (12) integriert ist und einen aktuell erfassten Druck-Messwert mit einem vorbestimmten, eine Leckage des wenigstens einen Kältekreises (1) wiedergebenden Druck-Schwellwert vergleicht.

3. Klimaanlage nach Anspruch 1,
**dadurch gekennzeichnet, dass**
die Vergleichseinrichtung in einen Klimaregler (16) der Klimaanlage integriert ist.

4. Klimaanlage nach Anspruch 3,
**dadurch gekennzeichnet, dass**
die Vergleichseinrichtung einen aktuell erfassten Druck-Messwert mit einem vorbestimmten, eine Leckage des wenigstens einen Kältekreises (1) wiedergebenden Druck-Schwellwert vergleicht.

5. Klimaanlage nach Anspruch 3,
**dadurch gekennzeichnet, dass**
die Vergleichseinrichtung aus einer Anzahl aufeinander folgender Druck-Messwerte einen Druckgradienten berechnet und mit einem vorbestimmten, eine Leckage des wenigstens einen Kältekreises (1) wiedergebenden Druckgradienten-Schwellwert vergleicht.

6. Klimaanlage nach einem der Ansprüche 1 bis 5,
**dadurch gekennzeichnet, dass**
der Drucksensor (12) in einem Hochdruckbereich des wenigstens einen Kältekreises (1) angeordnet ist.

7. Klimaanlage nach Anspruch 6,
**dadurch gekennzeichnet, dass**
der Drucksensor (12) zwischen dem Verflüssiger (6) und dem Expansionsventil (8) an den wenigstens einen Kältekreis (1) angeschlossen ist.

8. Klimaanlage nach einem der Ansprüche 1 bis 7,
**dadurch gekennzeichnet, dass**
als das Kältemittel ein brennbares Kältemittel wie R290 (Propan) eingesetzt ist.

9. Klimaanlage nach einem der Ansprüche 1 bis 8,
**dadurch gekennzeichnet, dass**
der Schalter als mittels einer Steuerspannung betätigbares Schütz (11) ausgebildet ist.

10. Verfahren zum Betrieb einer Klimaanlage für ein Fahrzeug, mit wenigstens einem Kältekreis (1) (oder mehreren Kältemittelkreisläufen), der eine Kältemittelleitung (2), einen Verdampfer (3), einen Verdichter (5), einen Verflüssiger (6) und ein Expansionsventil (8) umfasst, wobei dem Verflüssiger (6) ein Verflüssiger-Lüfter (7) zur Entwärmung des Verflüssigers (6) zugeordnet ist,
**dadurch gekennzeichnet, dass**
der wenigstens eine Kältekreis (1) mit einem Drucksensor (12) ausgestattet wird, der fortlaufend aktuelle, in einem Abschnitt des wenigstens einen Kältekreises (1) vorliegende Druck-Messwerte des Kältemittels erfasst und einer Vergleichseinrichtung signalisiert, die zum Feststellen einer Leckage in dem wenigstens einen Kältekreis (1) die Druck-Messwerte oder einen aus ihnen abgeleiteten Wert mit einem vorbestimmten, eine vorliegende Leckage des wenigstens einen Kältekreises (1) wiedergebenden Schwellwert vergleicht und aufgrund eines eine Leckage des wenigstens einen Kältekreises (1) anzeigenden Vergleichsergebnisses einen Schalter zum Einschalten des Verflüssiger-Lüfters (7) betätigt.

11. Verfahren nach Anspruch 10,
**dadurch gekennzeichnet, dass**
die Vergleichseinrichtung in den Drucksensor (12) integriert wird und einen aktuell erfassten Druck-Messwert mit einem vorbestimmten, eine Leckage des wenigstens einen Kältekreises (1) wiedergebenden Druck-Schwellwert vergleicht.

12. Verfahren nach Anspruch 10,
**dadurch gekennzeichnet, dass**
die Vergleichseinrichtung in einen Klimaregler (16) der Klimaanlage integriert ist.

13. Verfahren nach Anspruch 12,
**dadurch gekennzeichnet, dass**
die Vergleichseinrichtung einen aktuell erfassten Druck-Messwert mit einem vorbestimmten, eine Leckage des wenigstens einen Kältekreises (1) wiedergebenden Druck-Schwellwert vergleicht.

14. Verfahren nach Anspruch 12,
**dadurch gekennzeichnet, dass**
die Vergleichseinrichtung aus einer Anzahl aufeinander folgender Druck-Messwerte einen Druckgradienten berechnet und mit einem vorbestimmten, eine Leckage des wenigstens einen Kältekreises (1) wiedergebenden Druckgradienten-Schwellwert vergleicht.

15. Verfahren nach einem der Ansprüche 10 bis 14,
**dadurch gekennzeichnet, dass**
der Drucksensor (12) in einem Hochdruckbereich des wenigstens einen Kältekreises (1) angeordnet wird.

16. Verfahren nach Anspruch 10,
**dadurch gekennzeichnet, dass**
der Drucksensor (12) zwischen dem Verflüssiger (6) und dem Expansionsventil (8) an den wenigstens einen Kältekreis (1) angeschlossen wird.

17. Verfahren nach einem der Ansprüche 10 bis 16,
**dadurch gekennzeichnet, dass**
als das Kältemittel ein brennbares Kältemittel wie R290 (Propan) eingesetzt wird.
